# EUROPÄISCHE PATENTANMELDUNG

(11) **EP 3 219 639 A1**
(43) Veröffentlichungstag der Anmeldung: **20.09.2017**
(21) Anmeldenummer: 16160359.2
(22) Anmeldetag: 15.03.2016
(51) Int. Cl.: B65D 75/00, B65D 75/58, C04B 40/06

(54) **VERPACKUNGSSYSTEM FÜR EINE HÄRTBARE MEHRKOMPONENTENMASSE, DESSEN VERWENDUNG ZUR VERARBEITUNG DER HÄRTBAREN MEHRKOMPONENTENMASSE UND VERFAHREN ZUR HERSTELLUNG EINER HÄRTBAREN MEHRKOMPONENTENMASSE**

(71) Anmelder: HILTI Aktiengesellschaft, 9494 Schaan (LI)
(72) Erfinder: Paetow, Mario, 86859 Igling (DE); Jeromenok, Jekaterina, 86153 Augsburg (DE); Kabeche, Tanina, 81245 München (DE); Olschnoegger, Erica, 9488 Schellenberg (LI); Setzer, Friedemann, 86830 Schwabmünchen (DE)
(74) Vertreter: Hilti Aktiengesellschaft Corporate Intellectual Property

(57) **Zusammenfassung**

Ein Verpackungssystem (12) für eine härtbare Mehrkomponentenmasse umfasst einen Kunststoffbehälter (10), in dem eine reaktive Komponente (22) der Mehrkomponentenmasse sowie gegebenenfalls Mischelemente (24) eingebracht sind, wobei der Kunststoffbehälter (10) ein faltbarer Kunststoffbehälter (10) mit wenigstens einer verschließbaren Öffnung (14) ist, und wobei die reaktive Komponente (22) als Pulver vorliegt und nur einen Teil eines Gesamtvolumens des Kunststoffbehälters (10) ausfüllt. Des Weiteren ist die Verwendung des Verpackungssystems (12) zur Verarbeitung der härtbaren Mehrkomponentenmasse sowie ein Verfahren zur Herstellung einer härtbaren Mehrkomponentenmasse vorgesehen.

## Beschreibung

Die Erfindung betrifft ein Verpackungssystem für eine härtbare Mehrkomponentenmasse und die Verwendung des Verpackungssystems zur Verarbeitung der härtbaren Mehrkomponentenmasse. Ferner betrifft die Erfindung ein Verfahren zur Herstellung einer härtbaren Mehrkomponentenmasse, insbesondere eines Ortsschaums und vorzugsweise eines anorganischen Brandschutzschaums.

Zum schnellen Schließen von Öffnungen, wie beispielsweise Brandschutzdurchführungen im Baubereich, oder zum Verankern von Bauteilen in Bohrlöchern wird ein reaktives Material aus zwei Komponenten vor Ort gemischt und in die Öffnung eingebracht. Das reaktive Material kann, abhängig von der gewünschten Anwendung, bis zur Aushärtung standfest sein und nicht wieder aus der Öffnung herausfließen. Dies gilt insbesondere für Wandöffnungen. Für Deckenöffnungen hingegen kann es erwünscht sein, wenn das reaktive Material eine gewisse Fließfähigkeit aufweist.

Bei Zweikomponentenmassen aus Flüssigharzen wie Polyurethan oder Epoxidharzen wird die Standfestigkeit durch eine entsprechende Einstellung der Viskosität des Materials erreicht. Die reaktiven Komponenten werden getrennt in Zweikomponenten-Kartuschen mit einem Statikmischer vorgelegt und am Applikationsort durch Auspressen aus der Kartusche im Statikmischer gemischt. Für Mischungen aus Pulverkomponenten und Flüssigkeiten sind Statikmischer jedoch nicht geeignet, weil in der Pulverkomponente eine Brückenbildung auftritt, die eine Vermischung im Statikmischer durch Druck verhindert.

Aus Pulver und Flüssigkeiten bestehende Massen werden daher in einem offenen Gefäß unter Verwendung eines Rührstabs oder von anderen Mischhilfsmitteln mechanisch miteinander vermengt. Die gemischte Masse kann dann manuell in die zu füllende Öffnung eingebracht und/oder in die gewünschte Form gebracht werden, oder in weitere Applikationshilfsmittel wie beispielsweise eine Teigpresse gefüllt und in die Öffnung eingebracht werden.

Falls ein Pulver mit Flüssigkeit in einem starren, geschlossenen Behältnis gemischt werden soll, werden weitere Hilfsmittel wie beispielsweise Kugeln in einem zum Teil mit Luft gefüllten Raum benötigt. Zum Entleeren des Behälters ist eine im Wesentlichen flüssige Konsistenz der Mischung erforderlich.

Mehrkomponenten-Systeme zur Herstellung von Gipsschäumen und/oder Zementschäumen durch Mischen in offenen Gefäßen sind beispielsweise aus der EP 2 045 227 A bekannt. Die dort beschriebene hydraulisch abbindende Zusammensetzung dient zur Herstellung von anorganischen Brandschutz- oder Isolier-Ortsschäumen und umfasst ein pH-neutrales oder alkalisches hydraulisches Bindemittel und eine Schäumungskomponente sowie einen Schaumstabilisator, wobei die Schäumungskomponente Sauerstoff oder Kohlendioxid freisetzt. Die bekannten anorganischen Brandschutzsysteme können jedoch nur schwer in Öffnungen eingebracht werden und sind häufig nur als Vergussmasse mit aufwendigen Schalungsvorrichtungen anwendbar.

Ferner sind flüssige Zweikomponenten-Vergussharze bekannt, die in einen Zweikammer-Folienbeutel mit Klemmverschluss eingebracht sind. Hier wird das flüssige Vergussharz nach dem Entfernen des Klemmverschlusses manuell vermischt und anschließend beispielsweise in Kabelschuhe gegossen. Für standfeste Massen sind Klemmbeutel weniger gut geeignet, da das Vermischen der Komponenten durch Kneten von Hand erfolgen muss und deshalb die Mischgüte nur schwer kontrolliert und reproduziert werden kann.

Es besteht weiter Bedarf an einem einfachen und kostengünstigen Verpackungssystem zum guten Vermischen und Ausbringen von härtbaren Mehrkomponentenmassen in einem geschlossenen Behälter.

Der Erfindung liegt die Aufgabe zugrunde, eine einfache, anwenderfreundliche und kostengünstige Anwendungsform und Verpackung zum guten Mischen und Ausbringen von härtbaren Massen in einem geschlossenen Behälter bereitzustellen, insbesondere für chemische Anker oder für einen anorganischen Schaum auf Basis von Gips oder Zementmörtel für Isolier- oder Brandschutzanwendungen mit festen, pulverförmigen und flüssigen Komponenten. Die Anwendungsform soll das Mischen der Komponenten ohne aufwendige Werkzeuge gestatten und das Einbringen der Masse auch in enge und/oder schwer zugängliche Öffnungen ermöglichen.

Gelöst wird diese Aufgabe durch ein Verpackungssystem gemäß Anspruch 1. Gegenstand der Erfindung ist ferner die Verwendung des Verpackungssystems gemäß Anspruch 12 zur Verpackung und/oder Verarbeitung einer härtbaren Mehrkomponentenmasse, sowie ein Verfahren zur Herstellung und Verarbeitung einer härtbaren Mehrkomponentenmasse gemäß Anspruch 13, bevorzugt unter Verwendung des erfindungsgemäßen Verpackungssystems.

Vorteilhafte und zweckmäßige Ausgestaltungen des erfindungsgemäßen Verfahrens und des erfindungsgemäßen Verpackungssystems sind in den zugehörigen Unteransprüchen angegeben.

Die Erfindung stellt ein Verpackungssystem für eine härtbare Mehrkomponentenmasse bereit, mit einem Kunststoffbehälter, in dem eine reaktive Komponente der Mehrkomponentenmasse eingebracht ist, wobei der Kunststoffbehälter ein faltbarer Kunststoffbehälter mit wenigstens einer verschließbaren Öffnung ist. Die reaktive Komponente liegt als Pulver vor und füllt nur einen Teil eines Gesamtvolumens des Kunststoffbehälters aus.

Das erfindungsgemäße Verpackungssystem ermöglicht es, eine Mehrkomponentenmasse in verschiedenen Gebindegrößen von wenigen hundert Gramm bis etwa 10 kg mit einer jeweils vorgegebenen Menge der in den Kunststoffbehälter eingebrachten reaktiven Komponente und wahlweise einer separat bereitgestellten und/oder verpackten flüssigen Härterkomponente für die reaktive Komponente bereitzustellen. Damit kann eine Fehldosierung durch den Anwender sicher vermieden werden und die Mischung steht zur sofortigen Anwendung bereit. Durch einfaches Schütteln der festen und flüssigen Komponenten im verschlossenen Kunststoffbehälter können gute Mischungsergebnisse erzielt werden.

Die Mischungsergebnisse können weiterhin verbessert werden, indem die Menge der zu mischenden Komponenten in dem Kunststoffbehälter so gewählt wird, dass nach dem vollständigen Befüllen des Kunststoffbehälters ein Luftvolumen verbleibt.

Alternativ oder zusätzlich können Mischelemente in den Kunststoffbehälter eingebracht sein. Hierbei können die schweren Mischelemente, die beispielsweise Steine, Metallkugeln oder Glaskugeln sein können, für eine gute Durchmischung während des Schüttelns der festen und flüssigen Komponenten in dem Kunststoffbehälter zur Bildung der härtbaren Mehrkomponentenmasse sorgen. Eine Reproduzierbarkeit der Mischungsgüte ist durch Spezifizieren der Dauer und/oder Anzahl der Schüttelvorgänge möglich.

Während des Mischens der festen und flüssigen Komponenten in dem verschlossenen Kunststoffbehälter kann keine Staubentwicklung aus der pulverförmigen reaktiven Komponente auftreten. Ein Kontakt des Anwenders mit der reaktiven Komponente während des Mischens ist ausgeschlossen, so dass eine Gesundheitsgefährdung vermieden wird. Schließlich ist auch keine Reinigung von Mischwerkzeugen und Behältern nötig, da das Vermischen der Komponenten innerhalb des Kunststoffbehälters erfolgt.

Das in dem Kunststoffbehälter vorhandene Luftvolumen bzw. Leervolumen ermöglicht auch die Bereitstellung von schaumbildenden Massen. Zum Austragen der härtbaren Masse aus dem Kunststoffbehälter werden keine Misch- und Auspresswerkzeuge benötigt, um eine gute Restentleerung zu erreichen. Es bleibt dennoch möglich, den erfindungsgemäßen Kunststoffbehälter, der beispielsweise ein Folienbeutel sein kann, zum Austragen von Restmengen mit einem bekannten Foliendispenser zu verwenden. Da die Bildung der härtbaren Masse direkt in dem Kunststoffbehälter erfolgt, muss auch kein Vorlauf abgenommen werden. Die in dem Kunststoffbehälter vorgesehene Öffnung kann so gestaltet werden, dass die härtbare Masse bauseitig in enge und nur schwer zugängliche Öffnungen dosiert werden kann. Außerdem ermöglicht das erfindungsgemäße Verpackungssystem auch die Verarbeitung von standfesten härtbaren Massen, die sicher in der zu verfüllenden Öffnung verbleiben und dort aushärten.

Obwohl die Erfindung im Folgenden anhand eines Zweikomponentensystems beschrieben wird, sind auch Mehrkomponenten-Systeme von der Erfindung umfasst und mit geringem Aufwand zu verwirklichen, die mehr als zwei reaktive Komponenten aufweisen.

Die härtbare Mehrkomponentenmasse kann die in den Kunststoffbehälter eingebrachte reaktive Komponente in Pulverform und eine separat bereitgestellte Härterkomponente umfassen.

Falls die Härterkomponente aus Wasser besteht, kann die zur Bildung der härtbaren Masse notwendige Menge an Wasser vor Ort abgemessen und zur reaktiven Komponente in dem Kunststoffbehälter zugegeben werden. In anderen Ausführungsformen kann die Härterkomponente in separater Verpackung bereitgestellt und zur Anwendung vor Ort mit der reaktiven Komponente in dem Kunststoffbehälter vermischt werden.

Gemäß einer bevorzugten Ausführungsform ist die härtbare Mehrkomponentenmasse eine härtbare organische Masse, insbesondere auf Grundlage von Epoxiden, (Meth)acrylaten oder Polyurethan. Die flüssige Härterkomponente kann in diesem Fall insbesondere organische Amine, eine wässrige Peroxidlösung und/oder eine Lösung von organischen Peroxiden enthalten.

Gemäß einer weiteren Ausführungsform ist die Mehrkomponentenmasse eine anorganische Mehrkomponentenmasse, umfassend eine hydraulisch abbindende Komponente als pulverförmige reaktive Komponente und eine Wasser enthaltende oder aus Wasser bestehende Komponente als Härterkomponente. Als hydraulisch abbindende Komponente können Zement, insbesondere Portlandzement, Trass, Puzzolane, hydraulische Kalke und Gips oder deren Mischungen verwendet werden. Als Härterkomponente können Wasser oder wässrige Lösungen, wie Salzlösungen, säurehaltige Lösungen oder alkalihaltige Lösungen, verwendet werden.

Bevorzugt ist die anorganische Mehrkomponentenmasse ein anorganischer Brandschutzschaum oder Isolierschaum mit wenigstens einer hydraulisch abbindenden Komponente in Pulverform, einer Schäumungskomponente sowie einem Schaumstabilisator. Als hydraulisch abbindende Komponente können wiederum Zement, insbesondere Portlandzement, Trass, Puzzolane, hydraulische Kalke und Gips oder deren Mischungen verwendet werden. Die Schäumungskomponente kann aus einem Alkali- oder Erdalkalicarbonat oder -hydrogencarbonat als Pulverkomponente und einer Säure als flüssige Komponente gebildet sein. Die Schäumungskomponente kann alternativ oder zusätzlich einen Sauerstoffträger und einen Katalysator umfassen. Als Sauerstoffträger und flüssige Schäumungskomponente kann insbesondere Wasserstoffperoxid in wässriger Lösung dienen. Der Katalysator kann Braunstein MnO₂ in Pulverform umfassen. Derartige Mehrkomponenten-Schaumsysteme sind aus der EP 2 045 227 A1 bekannt, die hiermit in Bezug genommen wird.

Alle pulverförmigen Komponenten des Schaumsystems können zusammen in dem faltbaren Kunststoffbehälter vorgelegt werden. Die flüssigen Schaum- und Härterkomponenten können in separater Verpackung bereitgestellt werden.

Der faltbare Kunststoffbehälter kann jede beliebige Form und/oder Gestaltung aufweisen. Beispielsweise kann der Kunststoffbehälter als Standbeutel, Schlauchbeutel oder Flachbeutel gebildet sein. Die Herstellung dieser Systeme ist dem Fachmann grundsätzlich bekannt. Standbodenbeutel werden üblicherweise mit einer W-Falte im Bodenbereich ausgestattet, die sich beim Füllen der Kammer im Bodenbereich ausdehnt und einen festen Stand des Folienbeutels gewährleistet. Flachbeutel werden üblicherweise durch Aufeinanderlegen zweier Kunststofffolien und randumlaufendes Verschweißen der Folien gebildet. Schlauchbeutel entstehen durch Spritzen der Kunststofffolien aus Runddüsen unter Bildung eines Folienschlauchs und bodenseitiges Verschweißen der Schlauchenden oder Verklemmen der Schlauchenden mit einem Metall- oder Kunststoffbügel.

Die Form des Kunststoffbehälters kann würfelförmig, kissenförmig, pyramidenförmig oder zylinderförmig, mit runder oder polygonaler Grundfläche sein. Besonders bevorzugt ist der faltbare Kunststoffbehälter ein Faltkanister, wie er beispielsweise für Getränkeverpackungen und flüssige Lebensmittel bekannt ist.

Die Wandung des faltbaren Kunststoffbehälters weist bevorzugt eine Wandstärke auf, die ausreichend ist, um den mechanischen Belastungen beim Transport des Kunststoffbehälters und dem Vermischen der reaktiven Komponenten in dem Kunststoffbehälter zu widerstehen. Bevorzugt liegt die Wandstärke des Kunststoffbehälters im Bereich von 0,05 mm bis 0,8 mm, bevorzugt von 0,1 mm bis 0,3 mm.

Die Wandung des Kunststoffbehälters kann ein- oder mehrschichtig aufgebaut sein sowie durch Streckung orientiert sein. Bevorzugte Materialien für den Kunststoffbehälter sind Polyethylen, Polypropylen, Polystyrol, Polyamid, Polyurethan und Polyvinylacetat sowie deren Mischungen und Copolymerisate. Zusätzlich kann die Wandung des Kunststoffbehälters metallbeschichtet sein, vorzugsweise mit Aluminium beschichtet, oder eine Aluminium Folienschicht aufweisen.

Gemäß einer weiteren Ausführungsform des erfindungsgemäßen Verpackungssystems kann der faltbare Kunststoffbehälter eine verstärkende und vorzugsweise flexible Umhüllung aufweisen, bevorzugt eine Umhüllung aus einem Gewebe, Maschengestrick oder einer flexiblen Stützstruktur, wie beispielsweise einem flexiblen Folienbehälter. Die Umhüllung kann als separate Tasche oder Schachtel gebildet sein, in die der faltbare Kunststoffbehälter eingelegt werden kann. Der faltbare Kunststoffbehälter kann in diesem Fall als eine Auskleidung der Umhüllung mit entsprechend geringer Wandstärke ausgelegt sein.

Bevorzugt weist der faltbare Kunststoffbehälter wenigstens einen Haltegriff auf, an dem der Kunststoffbehälter während des Mischvorgangs durch Schütteln der festen und flüssigen Komponenten im Kunststoffbehälter gehalten werden kann. Der wenigstens eine Haltegriff kann auch an der Umhüllung angeordnet sein.

Die wenigstens eine Öffnung des faltbaren Kunststoffbehälters ist vorzugsweise als Schraubverschluss, Schlauchanschluss oder Absperrhahn ausgebildet. Ein Schraubverschluss kann außerdem als Anschluss für eine Kartuschendüse oder Düsenspitze dienen, mit denen die härtbare Masse je nach dem gewünschten Anwendungszweck am Applikationsort aus dem Kunststoffbehälter ausgetragen werden kann.

Ein Schlauchanschluss erlaubt das Anbringen eines Verlängerungsschlauches, mit dem die härtbare Masse auch in schwer zugängliche Öffnungen verfüllt werden kann. Ein Absperrhahn eignet sich zum Ausbringen von fließfähigen Massen an verschiedenen Applikationsorten und verhindert das ungewollte Austreten der Masse aus dem Kunststoffbehälter während der Anwendung.

Gemäß einer weiteren Ausführungsform kann der Kunststoffbehälter mehrere verschließbare Öffnungen aufweisen, beispielsweise eine Öffnung zum Einfüllen der pulverförmigen reaktiven Komponente und/oder der flüssigen Härterkomponente und eine weitere Öffnung zum Austragen der härtbaren Masse. Die Öffnung zum Austragen der härtbaren Masse kann durch eine in den Kunststoffbehälter eingeschweißte, bevorzugt konisch oder spitz zulaufenden Düsenspitze oder Kunststofftülle gebildet sein. Bei Bedarf kann die Düsenspitze oder Tülle auch durch Aufstecken einer weiteren Kunststoffspitze verlängert werden. Vorzugsweise ist die Düsenspitze oder Kunststofftülle an ihrem freien Ende verschlossen und wird am Applikationsort je nach der gewünschten Größe der Düsenöffnung aufgeschnitten oder kann an einer vorgesehenen Schwächungszone, wie einer Einreißkerbe oder einer ringförmigen Sollbruchstelle, abgebrochen werden. Hierdurch wird keine Schere oder Messer benötigt. Das Verfüllen von bauseitigen Öffnungen oder Fugen ist auf diese Weise schnell, einfach und kostengünstig möglich.

Die Öffnung zum Austragen der härtbaren Masse kann außerdem an einer an den Kunststoffbehälter einstückig angeformten Tülle gebildet sein. Die Tülle kann rohrförmig sein oder zu ihrem freien Ende hin konisch oder spitz zulaufen. Am freien Ende der Tülle kann ein Schraubverschluss vorgesehen sein, an den beispielsweise eine Kartuschendüse angeschlossen werden kann. Besonders bevorzugt ist die Tülle an ihrem freien Ende mit einer Schwächungszone wie beispielsweise einer Reißnaht versehen, die ein Aufreißen der Tülle ohne Werkzeug ermöglicht. Auf diese Weise können auch schwer zugängliche Öffnungen schnell, einfach und kostengünstig mit der Mehrkomponentenmasse verfüllt werden.

Gemäß einer weiteren bevorzugten Ausführungsform weisen die Mischelemente einen maximalen Durchmesser von 5 mm bis 50 mm, bevorzugt von 8 mm bis 40 mm, und/oder ein Gewicht von 2g bis 30g, bevorzugt 2g bis 20g auf. Diese Größen und Massen der Mischelemente sind besonders gut für die Durchmischung während des Schüttelns der festen und flüssigen Komponenten in dem Kunststoffbehälter zur Bildung der härtbaren Mehrkomponentenmasse geeignet.

Der Kunststoffbehälter kann ferner ein vor der Öffnung angeordnetes Gitter oder grobmaschiges Sieb mit einem entsprechenden Gitterabstand aufweisen, mit dem die Mischelemente beim Austragen der Masse aus dem Kunststoffbehälter zurückgehalten werden, ohne die Öffnung zu blockieren. Kleinere Mischelemente können ohne Qualitätsverlust in der härtbaren Mehrkomponentenmasse verbleiben, sofern sie die Öffnung passieren können.

Bevorzugt füllen die pulverförmige reaktive Masse und die Mischelemente mindestens etwa 20 %, bevorzugt mindestens etwa 30 % und besonders bevorzugt mindestens etwa 40 % des Gesamtvolumens des Kunststoffbehälters aus. Zum guten Durchmischen der festen und flüssigen Komponenten ist in dem Kunststoffbehälter bevorzugt ein Luftvolumen vorgesehen. Bevorzugt beträgt das Luftvolumen von etwa 20 % bis 80 % des Gesamtvolumens des Kunststoffbehälters, weiter bevorzugt von etwa 25 % bis etwa 75 % und besonders bevorzugt von etwa 30 % bis etwa 70 %. Das Volumen der pulverförmigen reaktiven Masse und der Mischelemente kann entsprechend bis zu etwa 80 % des Gesamtvolumens des Kunststoffbehälters betragen, bevorzugt 30 % bis 80 %, weiter bevorzugt 35 bis 70 % und stärker bevorzugt 40 bis 60 %.

Gegenstand der Erfindung ist ferner eine Verwendung des oben beschriebenen Verpackungssystems zur Verpackung und/oder Verarbeitung einer härtbaren Mehrkomponentenmasse, und insbesondere einer härtbaren anorganischen Mehrkomponentenmasse, bevorzugt eines anorganischen Mehrkomponenten-Schaumsystems.

Zur Herstellung der härtbaren Mehrkomponentenmasse wird zunächst eine reaktive Pulverkomponente der Mehrkomponentenmasse gegebenenfalls zusammen mit Mischelementen in einem faltbaren Kunststoffbehälter bereitgestellt. Die reaktive Komponente in dem Kunststoffbehälter wird mit der Härterkomponente versetzt und der Kunststoffbehälter verschlossen. Wahlweise können zusätzlich zur Härterkomponente weitere feste oder flüssige Komponenten zugegeben werden. Danach werden die flüssigen und festen Komponenten in dem Kunststoffbehälter durch Schütteln und/oder Bewegen und/oder Kneten unter Bildung der härtbaren Mehrkomponentenmasse gemischt. Sobald der Mischvorgang abgeschlossen ist, wird die härtbare Mehrkomponentenmasse durch Zusammenfalten des Kunststoffbehälters aus der im Kunststoffbehälter vorgesehenen Öffnung ausgepresst und bauseitig in die zu verfüllende Öffnung eingetragen.

Der Kunststoffbehälter mit der pulverförmigen reaktiven Masse kann als vorkonfektioniertes Produkt in Form des oben beschriebenen Verpackungssystems eingesetzt werden, dem auch die separat verpackte Härterkomponente beigefügt sein kann. Die härtbare Mehrkomponentenmasse wird dann unter Verwendung des oben beschriebenen Verpackungssystems verarbeitet wird. Es ist auch möglich, die pulverförmige Komponente abzumessen und am Applikationsort in den Kunststoffbehälter einzufüllen.

Unter Verwendung des erfindungsgemäßen Verpackungssystems kann insbesondere ein Ortsschaum aus einem anorganischen Mehrkomponenten-Schaumsystem hergestellt werden, wobei die feste anorganische Pulverkomponente in dem Kunststoffbehälter und die flüssige Schäumungskomponente für die feste anorganische Pulverkomponente in separater Verpackung bereitgestellt wird. Die Pulverkomponente wird in dem Kunststoffbehälter mit der flüssigen Schäumungskomponente gemischt. Nach dem Vermischen der Pulverkomponente und der Schäumungskomponente wird die verschlossene Öffnung wieder geöffnet. Das im Kunststoffbehälter befindliche Gemisch bzw. der zum Teil schon gebildete Schaum wird aus der Öffnung ausgetragen und bauseitig in eine zu füllende Öffnung eingebracht. Das durch die Gase, die während des Mischvorgangs der Schäumungskomponente und der Pulverkomponente im geschlossenen Kunststoffbehälter entstehen, gebildete Volumen sollte nicht größer sein als das noch zusätzlich im Kunststoffbehälter vorhandene Volumen. Um ein Spritzen beim Einfüllen des Schaums in die Öffnung zu reduzieren oder gar zu verhindern kann, falls erforderlich, der Kunststoffbehälter nach dem Vermischen der Pulverkomponenten und der Schäumungskomponente und gegebenenfalls nach dem Aufsetzen einer Einfülltülle teilweise zusammengefaltet werden, damit das vorhandene Luftvolumen im Kunststoffbehälter verringert wird.

Das anorganische Mehrkomponenten-Schaumsystem ist vorzugsweise ein Zweikomponenten-Schaumsystem, und besonders bevorzugt ein Brandschutzschaum.

Der aus dem Schaumsystem gebildete Schaum kann anschließend durch Zusammenfalten des Kunststoffbehälters aus der Öffnung ausgetragen und in die zu verfüllende Öffnung eingebracht werden und auch dort weiter expandieren. Die Verwendung von Düsenspitzen mit einer spitz zulaufenden Auspressöffnung und einem vorgegebenen Öffnungsquerschnitt ermöglicht ein gezieltes Einbringen des Schaumsystems auch in enge Spalte mit schlechter Zugänglichkeit. Die Düsenspitzen können mit Schwächungszonen versehen sein, so dass zum Öffnen der Düsenspitzen keine Schere oder kein Messer benötigt wird. Die bauseitigen Öffnungen können somit schnell, einfach und kostengünstig mit dem Schaumsystem ausgefüllt werden. Es sind auch flexible Schlauchaufsätze hilfreich, um bauseitigen Öffnungen mit schlechten Zugänglichkeiten sicher zu befüllen.

Weitere Merkmale und Vorteile der Erfindung ergeben sich aus der nachfolgenden Beschreibung einer bevorzugten Ausführungsform und aus der nachfolgenden Zeichnung, auf die Bezug genommen wird. In der Zeichnung zeigt:

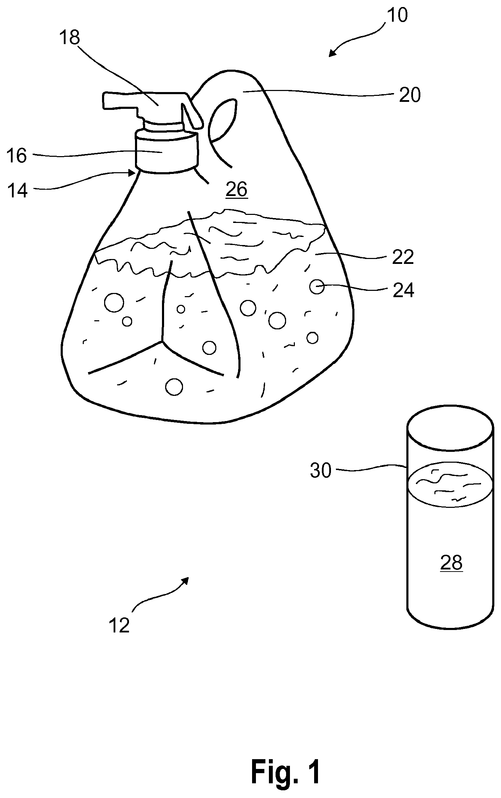

- Figur 1: eine schematische Darstellung eines erfindungsgemäßen Verpackungssystems gemäß einer ersten Ausführungsform.

Der in Figur 1 dargestellte Kunststoffbehälter 10 des erfindungsgemäßen Verpackungssystems 12 ist als faltbarer Standfolienbeutel mit einer verschließbaren Öffnung 14 ausgebildet. Bei der hier gezeigten Ausführungsform ist die Öffnung 14 mit einem Schraubverschluss 16 verschlossen, an den ein Absperrhahn 18 angeschlossen ist. Der Kunststoffbehälter 10 weist ferner einen einstückig an den Kunststoffbehälter 10 angeformten Haltegriff 20 auf.

In den Kunststoffbehälter 10 ist die pulverförmige reaktive Komponente 22 einer härtbaren anorganischen Mehrkomponentenmasse eingefüllt. Ferner sind grobkörnige Mischelemente 24 in Form von Steinen oder Kies in der pulverförmigen Komponente 22 verteilt. Über der pulverförmigen Komponente 22 befindet sich ein Luftvolumen 26, das etwa 40 % des Gesamtvolumens des Kunststoffbehälters 10 beträgt.

Die als Mischelemente 24 verwendeten Steine weisen einen maximalen Durchmesser von 10 mm bis 40 mm und/oder ein Gewicht von 2g bis 20g auf.

Als Mischelemente 24 können auch Metall- oder Glaskugeln verwendet werden, vorzugsweise mit einem Durchmesser von 8 mm bis 30 mm und/oder einem Gewicht von 2 g bis 20 g.

Anstelle des Absperrhahns 18 kann eine an den Schraubverschluss 16 angeschlossene Kartuschendüse vorgesehen sein, oder der Schraubverschluss 16 kann einen Anschluss für einen Verlängerungsschlauch aufweisen.

Die pulverförmige Komponente 22 umfasst bevorzugt ein hydraulisch abbindendes Bindemittel auf Basis von Gips oder Zementmörtel, sowie wahlweise die festen Bestandteile eines Schäumungssystems wie ein Alkali- oder Erdalkalicarbonat und/oder einen Katalysator für das Freisetzen von Sauerstoff aus einem Sauerstoffträger. Die Korngrößenverteilung der pulverförmigen Komponente 22 beträgt vorzugsweise d90 ≤ 200 µm, d. h., etwa 90 % aller Teilchen der pulverförmigen Komponente weisen eine Korngröße von 200 µm oder kleiner auf. Die pulverförmige Komponente kann daneben auch Fasern mit einer Länge von etwa 1 bis 6 mm bei einem Faserdurchmesser von 10 bis 30 µm enthalten.

Die zum Vermischen mit der pulverförmigen Komponente 22 vorgesehene flüssige Härterkomponente 28 kann in einer separaten Verpackung 30 bereitgestellt werden. Die Härterkomponente 28 umfasst vorzugsweise Wasser sowie wahlweise die flüssigen bzw. gelösten Bestandteile eines Schäumungssystems wie eine Säure und/oder Wasserstoffperoxid.

Die härtbare Mehrkomponentenmasse wird bevorzugt als Ortsschaum bereitgestellt, der als ein anorganischer Brandschutzschaum oder Isolierschaum verwendet wird.

Zur Herstellung der härtbaren Mehrkomponentenmasse wird der Schraubverschluss 16 geöffnet und die pulverförmige Komponente 22 im Kunststoffbehälter 10 mit der flüssigen Härterkomponente 28 versetzt. Bei Herstellung einer schaumbildenden Masse kann durch Zusammenfalten des Kunststoffbehälters 10 ein Teil des Luftvolumens 26 aus dem Kunststoffbehälter 10 entfernt werden. Danach wird der Kunststoffbehälter 10 wieder mit dem Schraubverschluss 16 verschlossen. Durch Schütteln und/oder Bewegen und/oder Kneten wird die feste anorganische Pulverkomponente 22 mit der flüssigen Härterkomponente 28 unter der härtbaren Mehrkomponentenmasse vermischt. Während des Schüttelns kann der Kunststoffbehälter 10 an dem Haltegriff 20 gehalten werden. Ein durch Aufschäumen der Masse etwa entstehender Überdruck kann auch durch Öffnen des Absperrhahns 18 abgelassen werden.

Nach dem Vermischen der pulverförmigen und flüssigen Komponenten 22, 28 wird der Schraubverschluss 16 geöffnet und eine Kartuschendüse auf den Schraubverschluss 16 aufgesetzt. Die aufgeschäumte Mehrkomponentenmasse wird durch Zusammenfalten des Kunststoffbehälters 10 über die Kartuschendüse aus dem Kunststoffbehälter 10 ausgetragen und direkt in die zu füllende bauseitige Öffnung eingebracht. Dort kann die Mehrkomponentenmasse nachträglich in Form gebracht werden, weiter aufschäumen und aushärten.

## Patentansprüche

1. Verpackungssystem (12) für eine härtbare Mehrkomponentenmasse, mit einem Kunststoffbehälter (10), in dem eine reaktive Komponente (22) der Mehrkomponentenmasse eingebracht ist, wobei der Kunststoffbehälter (10) ein faltbarer Kunststoffbehälter (10) mit wenigstens einer verschließbaren Öffnung (14) ist, und wobei die reaktive Komponente (22) als Pulver vorliegt und nur einen Teil eines Gesamtvolumens des Kunststoffbehälters (10) ausfüllt.

2. Verpackungssystem nach Anspruch 1, **dadurch gekennzeichnet, dass** die härtbare Mehrkomponentenmasse die in den Kunststoffbehälter (10) eingebrachte reaktive Komponente (22) und eine separat bereitgestellte Härterkomponente (28) umfasst.

3. Verpackungssystem nach Anspruch 2, **dadurch gekennzeichnet, dass** die Mehrkomponentenmasse eine organische Masse auf Grundlage von Epoxiden, (Meth)acrylaten oder Polyurethan ist.

4. Verpackungssystem nach Anspruch 2, **dadurch gekennzeichnet, dass** die Mehrkomponentenmasse eine anorganische Mehrkomponentenmasse und die in den Kunststoffbehälter (10) eingebrachte reaktive Komponente (22) eine hydraulisch abbindende Komponente der Mehrkomponentenmasse ist.

5. Verpackungssystem nach Anspruch 4, **dadurch gekennzeichnet, dass** die Härterkomponente (28) Wasser enthält oder aus Wasser besteht.

6. Verpackungssystem nach einem der Anspruch 4 oder 5, **dadurch gekennzeichnet, dass** die Mehrkomponentenmasse ein anorganischer Brandschutzschaum oder Isolierschaum ist.

7. Verpackungssystem nach einem der vorangehenden Ansprüche, **dadurch gekennzeichnet, dass** der faltbare Kunststoffbehälter (10) eine verstärkende Umhüllung aufweist, bevorzugt eine Umhüllung aus einem Gewebe oder einer flexiblen Stützstruktur.

8. Verpackungssystem nach einem der vorangehenden Ansprüche, **dadurch gekennzeichnet, dass** die wenigstens eine Öffnung (14) als Schraubverschluss (16), Schlauchanschluss oder Absperrhahn (18) ausgebildet ist.

9. Verpackungssystem nach einem der vorangehenden Ansprüche, **dadurch gekennzeichnet, dass** die Öffnung (14) einen Anschluss für eine Düsenspitze aufweist.

10. Verpackungssystem nach einem der vorangehenden Ansprüche, **dadurch gekennzeichnet, dass** ferner Mischelemente (24) in den Kunststoffbehälter (10) eingebracht sind.

11. Verpackungssystem nach Anspruch 10, **dadurch gekennzeichnet, dass** die Mischelemente (24) einen maximalen Durchmesser von 5 mm bis 50 mm, bevorzugt von 8 mm bis 40 mm, und/oder ein Gewicht von 2g bis 30g, bevorzugt 2g bis 20g aufweisen.

12. Verpackungssystem nach einem der vorangehenden Ansprüche, **dadurch gekennzeichnet, dass** die reaktive Masse (22) gegebenenfalls zusammen mit den Mischelementen (24) bis zu 80 %, vorzugsweise von 30 % bis 80 %, des Gesamtvolumens ausfüllt.

13. Verwendung eines Verpackungssystems gemäß einem der Ansprüche 1 bis 12 zur Verpackung und/oder Verarbeitung einer härtbaren Mehrkomponentenmasse, insbesondere einer anorganischen härtbaren Mehrkomponentenmasse.

14. Verfahren zur Herstellung einer härtbaren Mehrkomponentenmasse, bei dem eine reaktive Komponente (22) der Mehrkomponentenmasse in einen faltbaren Kunststoffbehälter (10) bereitgestellt wird, die reaktive Komponente (22) in dem Kunststoffbehälter (10) mit einer Härterkomponente (28) versetzt und nach Verschließen des Kunststoffbehälters (10) durch Schütteln in dem Kunststoffbehälter (10) unter Bildung der härtbaren Mehrkomponentenmasse gemischt wird, und die härtbare Mehrkomponentenmasse durch Zusammenfalten des Kunststoffbehälters (10) aus einer Öffnung (14) des Kunststoffbehälters (10) ausgepresst wird.

15. Verfahren nach Anspruch 14, **dadurch gekennzeichnet, dass** die härtbare Mehrkomponentenmasse unter Verwendung des Verpackungssystems (12) gemäß einem der Ansprüche 1 bis 12 verarbeitet wird.
